# EUROPEAN PATENT SPECIFICATION

(11) **EP 4 361 967 B1**
(45) Date of publication and mention of the grant of the patent: **11.03.2026**
(21) Application number: 22204464.6
(22) Date of filing: 28.10.2022
(51) Int. Cl.: G06V 20/58, G06F 18/20

(54) **SITUATION SPECIFIC PERCEPTION CAPABILITY FOR AUTONOMOUS AND SEMI-AUTONOMOUS VEHICLES**
SITUATIONSSPEZIFISCHE WAHRNEHMUNGSFÄHIGKEIT FÜR AUTONOME UND HALBAUTONOME FAHRZEUGE
CAPACITÉ DE PERCEPTION SPÉCIFIQUE À UNE SITUATION POUR VÉHICULES AUTONOMES ET SEMI-AUTONOMES

(43) Date of publication of application: 01.05.2024
(73) Proprietor: Zenseact AB, 417 56 Göteborg (SE)
(72) Inventor: GYLLENHAMMAR, Magnus, 43543 Pixbo (SE); ZANDÉN, Carl, 43738 Lindome (SE); KHORSAND VAKILZADEH, Majid, 43166 Mölndal (SE)
(74) Representative: Zacco Sweden AB

(56) References cited:
- PAVLITSKAYA SVETLANA ET AL: "Using Mixture of Expert Models to Gain Insights into Semantic Segmentation", 2020 IEEE/CVF CONFERENCE ON COMPUTER VISION AND PATTERN RECOGNITION WORKSHOPS (CVPRW), IEEE, 14 June 2020 (2020-06-14), pages 1399 - 1406, XP033799225, DOI: 10.1109/CVPRW50498.2020.00179
- LEE JONG TAEK ET AL: "Deep Learning-Based Vehicle Classification Using an Ensemble of Local Expert and Global Networks", 2017 IEEE CONFERENCE ON COMPUTER VISION AND PATTERN RECOGNITION WORKSHOPS (CVPRW), IEEE, 21 July 2017 (2017-07-21), pages 920 - 925, XP033145869, DOI: 10.1109/CVPRW.2017.127
- VALADA ABHINAV ET AL: "AdapNet: Adaptive semantic segmentation in adverse environmental conditions", 2017 IEEE INTERNATIONAL CONFERENCE ON ROBOTICS AND AUTOMATION (ICRA), IEEE, 29 May 2017 (2017-05-29), pages 4644 - 4651, XP033127282, DOI: 10.1109/ICRA.2017.7989540

## Description

### TECHNICAL FIELD

The disclosed technology relates to methods and systems for providing environment perception for a vehicle having an Automated Driving System (ADS). In particular, but not exclusively the disclosed technology relates to methods and systems enabling the use of specialized neural networks for different traffic situations or conditions for optimizing situational performance with limited computational resources.

### BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. Today, there is ongoing research and development within a number of technical areas associated to both the ADAS and Autonomous Driving (AD) field. ADAS and AD will herein be referred to under the common term Automated Driving System (ADS) corresponding to all of the different levels of automation as for example defined by the SAE J3016 levels (0 - 5) of driving automation, and in particular for levels 3-5.

In a not too distant future, ADS solutions are expected to have found their way into a majority of the new cars being put on the market. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

Reliable and high performing perception of the surrounding world throughout all use-cases is one of the most challenging aspects of ADSs. Vision and object detection/classification are particularly challenging and often rely on (deep) neural networks that have been fed with vast amounts of training data in order to provide adequate performance across the large variety of use-cases. However, these networks are associated with large computational footprints translating into heavy requirements on the computational power available for solving the various perception tasks. Thus, a technical challenge with deploying high performance perception capability in the automotive field is the limited computational resources available, which limits the allowable computational footprint of the environment perception of the vehicle. In other words, presently known technology related to high performing environment perception may not be feasible for use for solving the perception task for autonomous and semi-autonomous vehicles.

Thus, there is a need in the art for new solutions for providing high performance perception capability for autonomous and semi-autonomous vehicles in the large variety of situations and scenarios that the vehicles might be exposed to while accounting for the limited computational resources available in the vehicle. Relevant prior art documents include: S. Pavlitskaya et al., "Using Mixture of Expert Models to Gain Insights into Semantic Segmentation," 2020 IEEE/CVF Conference on Computer Vision and Pattern Recognition Workshops (CVPRW), Seattle, WA, USA, 2020, pp. 1399-1406, doi: 10.1109/ CVPRW50498.2020.00179; J. T. Lee and Y. Chung, "Deep Learning-Based Vehicle Classification Using an Ensemble of Local Expert and Global Networks," 2017 IEEE Conference on Computer Vision and Pattern Recognition Workshops (CVPRW), Honolulu, HI, USA, 2017, pp. 920-925, doi: 10.1109/CVPRW.2017.127.

### SUMMARY

The herein disclosed technology seeks to mitigate, alleviate or eliminate one or more of the aboveidentified deficiencies and disadvantages in the prior art to address various problems relating to large computational footprints for providing high performing perception capability for autonomous and semi-autonomous vehicles.

Various aspects and embodiments of the disclosed invention are defined below and in the accompanying independent and dependent claims.

A first aspect of the disclosed technology comprises a computer-implemented method for providing environment perception for a vehicle having an Automated Driving System (ADS). The ADS comprises a generalized perception network comprising a generally trained machine-learning algorithm configured to provide a perception output for a scene depicted in one or more input images. The ADS further comprises a plurality of specific perception networks, where each specific perception network comprises a specifically trained machine-learning algorithm configured to provide a perception output for a scene depicted in one or more input images. Moreover, each specifically trained machine-learning algorithm is trained with data associated with a specific traffic situation such that each specifically trained machine-learning algorithm is trained for a different traffic situation as compared to the other specifically trained machine-learning algorithms of the plurality of specific perception networks. The method comprises obtaining sensor data from one or more vehicle-mounted sensors, where the obtained sensor data comprises information about a surrounding environment of the vehicle. Further, the method comprises selecting one or more specific perception networks for activation out of the plurality of specific perception networks based on a current traffic situation indicated in (or inferable/derivable from) the obtained sensor data. The method further comprises feeding at least a portion of the obtained sensor data to each of the selected one or more specific perception networks and to the generalized perception network in order to obtain an output from each of the selected one or more specific perception networks and the generalized perception network. The method further comprises fusing the obtained outputs from each of the selected one or more specific perception networks and the generalized perception network, where the fused output comprises one or more perception output in relation to the surrounding environment of the vehicle. Further, the method comprises transmitting the fused output to a module of the ADS.

A second aspect of the disclosed technology comprises a computer program product comprising instructions which, when the program is executed by a computing device, causes the computer to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device, causes the computer to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for providing environment perception for a vehicle. The system comprises a generalized perception network comprising a generally trained machine-learning algorithm configured to provide a perception output for a scene depicted in one or more input images. The system further comprises a plurality of specific perception networks, where each specific perception network comprises a specifically trained machine-learning algorithm configured to provide a perception output for a scene depicted in one or more input images. Moreover, each specifically trained machine-learning algorithm is trained with data associated with a specific traffic situation such that each specifically trained machine-learning algorithm is trained for a different traffic situation as compared to the other specifically trained machine-learning algorithms of the plurality of specific perception networks. Moreover, the system comprises control circuitry configured to obtain sensor data from one or more vehicle-mounted sensors, where the obtained sensor data comprises information about a surrounding environment of the vehicle. The control circuitry is further configured to select one or more specific perception networks for activation out of the plurality of specific perception networks based on a current traffic situation indicated in the obtained sensor data. Furthermore, the control circuitry is configured to feed at least a portion of the obtained sensor data to each of the selected one or more specific perception networks and to the generalized perception network in order to obtain an output from each of the selected one or more specific perception networks and the generalized perception network. The control circuitry is further configured to fuse the obtained outputs from each of the selected one or more specific perception networks and the generalized perception network, where the fused output comprises one or more perception output in relation to the surrounding environment of the vehicle. Furthermore, the control circuitry is configured to transmit the fused output to a module of an Automated Driving System (ADS) of the vehicle. With this aspect of the disclosed technology, similar advantages and preferred features are present as in the other aspects.

A fifth aspect of the disclosed technology comprises a vehicle comprising a system according to the fourth aspect of the disclosed technology. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that specific situational performance and safety may be improved for an Automated Driving System (ADS). Thereby leading overall improved road safety for ADS-equipped vehicles.

An advantage of some embodiments is that new updates of the perception software of the ADS may be launched in a safer manner as so called "local dark launches" (e.g. only in a small sub-portion of possible situations for the ADS). Thereby improving overall system safety when new updates are being deployed.

An advantage of some embodiments is that the herein proposed technology is that they enable for contained and targeted improvements/updates for the perception functionality of an ADS.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for providing environment perception for a vehicle having an Automated Driving System (ADS) in accordance with some embodiments.
Fig. 2 is a schematic illustration showing a "horizon of interest" for solving perception tasks for vehicles driving at different speeds.
Fig. 3 is a schematic block diagram representation of a system for providing environment perception for a vehicle having an Automated Driving System (ADS) in accordance with some embodiments.
Fig. 4 is a schematic block diagram representation of a system for providing environment perception for a vehicle having an Automated Driving System (ADS) in accordance with some embodiments.
Fig. 5a is a schematic illustration showing a perception output from a generalized perception network in accordance with some embodiments.
Fig. 5b is a schematic illustration showing a perception output from a set of specific perception networks using the same input as in Fig. 5a in accordance with some embodiments.
Fig. 6a is a schematic illustration showing a perception output from a generalized perception network in accordance with some embodiments.
Fig. 6b is a schematic illustration showing a perception output from a set of specific perception networks using the same input as in Fig. 6a in accordance with some embodiments.
Fig. 7 is a schematic illustration of a machine-learning classification system in accordance with some embodiments.
Fig. 8 is a schematic illustration of a vehicle comprising a system for providing environment perception for in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

As mentioned, reliable and high performing perception of the surrounding world throughout all use-cases is one of the most challenging aspects of Automated Driving Systems (ADSs). Vision and object detection/classification are particularly challenging and often rely on (deep) neural networks that have been fed with vast amounts of training data in order to provide adequate performance across the large variety of use-cases. However, these networks are associated with large computational footprints translating into heavy requirements on the computational power available for solving the various perception tasks across the variety of use-cases or situations that might occur. Thus, a technical challenge with deploying high performance perception capability in the automotive field is the limited computational resources available, which limits the allowable computational footprint of the environment perception of the vehicle.

Turning to a specific example for elucidating the challenge, one can consider the perception task/function of detecting pedestrians (i.e. a subgroup of Vulnerable Road User (VRU) detection). The training data used for training the machine-learning algorithms for solving this perception task comprises images that typically include different pedestrians both near and far, to make the machine-learning algorithm (e.g. artificial neural network) robust in terms of pedestrian detections.

The machine-learning algorithm will then learn the features (e.g. patterns in the pixel data) that are associated with pedestrians being present, e.g. in a bounded box or pixel-by-pixel. If one does a good job with this training, the result is a machine-learning algorithm that will provide adequate performance at detecting pedestrians in general, i.e. "regardless" of the distance to the ego-vehicle or of the pedestrians attire (e.g. if they wear a specific garment or not). However, for a machine-learning algorithm whose general objective is to have a relatively high performance in all situation (i.e. solving the perception task on a "general level"), it is likely that the performance will not be optimal for every specific situation. The trade-off from achieving a good generalisation is typically such that one achieves less performance in each specific case both due to the relative scarcity of examples of the specific type, but also due to the need for the machine-learning algorithm to find larger scope for the generalisations it makes.

Moreover, it was realised by the present inventors that different situations (i.e. different traffic scenarios being associated with different operational parameters) benefit from different focused capacities of the perception system of the ADS. An example of this is how the "horizon of interest" is quite different for a vehicle driving at low speed as compared to for a vehicle driving at high speed. The "horizon of interest" may be understood as specific areas relative to the vehicle, within which, it is important that the perception system to provide accurate or reliable perception output.

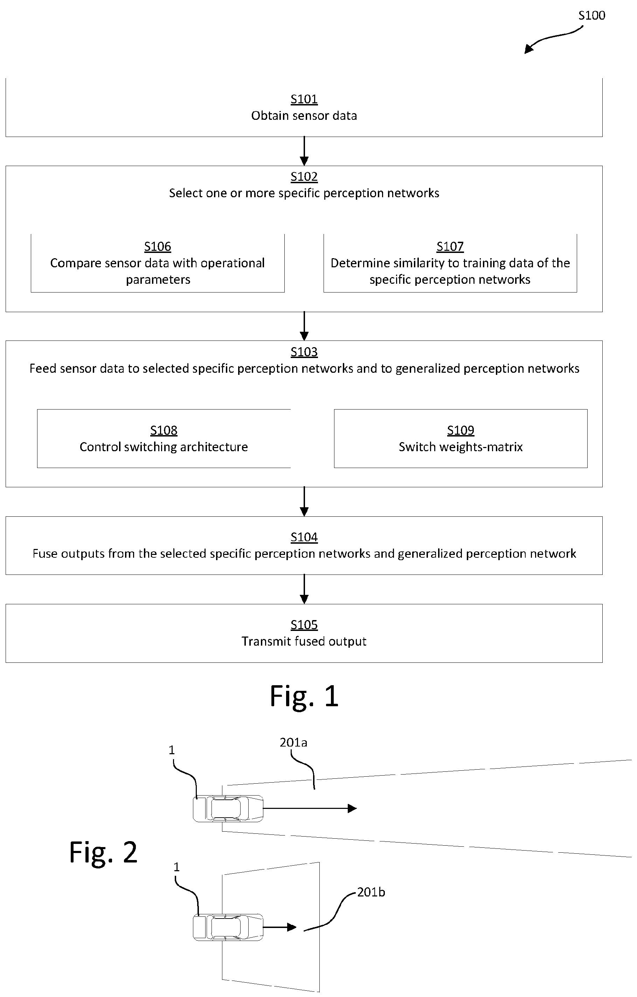

Fig. 2 is a schematic illustration of the horizon of interest 201a, 201b in two cases with differing egospeeds (as indicated by the extending in front of the vehicle 1). The top-most vehicle 1 is traveling at a higher speed than the bottom-most vehicle 1, which forms a need for accurately detecting and/or classifying objects at greater distances in front of the vehicle more relevant, while reducing the need for accurately detecting and/or classifying objects at greater distances to the side of the vehicle 1.

In more detail, if one considers a traffic jam scenario (i.e. a low speed scenario), there is no particular need for the perception system to be able to detect pedestrians at a 100m distance or more from the ego-vehicle in order for the ADS to function in a safe and reliable manner. Instead, from at least a safety and performance perspective of the ADS (e.g. employing a traffic jam pilot), it is more important to ensure that the pedestrians located at a distance of 1-10m from the vehicle that are the most important are detected and/or classified correctly. Moreover, pedestrians or other vulnerable road users (VRUs) located to the side of the vehicle are more relevant in the traffic jam scenario since there is a higher risk that these pedestrians traverse a planned path/trajectory of the vehicle while it is moving at slow speed, as compared to a "normal" highway scenario where the vehicle is traveling at far greater speeds. For example if there are persons getting out of their vehicles (in a traffic jam), or persons taking the opportunity to cross the road right in front of the ego-vehicle since traffic is moving slowly.

Accordingly, for such low speed scenarios such as a traffic jam scenario, the safety of the ADS may be improved by employing the system in accordance with the embodiments disclosed herein. In more detail, the safety of the ADS may be improved by having a perception system capable of employing a specialized perception network that is specifically trained to detect pedestrians within 0 to 10m from the ego-vehicle. As opposed to solely relying on a generalized perception network which has, out of necessity, been trained to make generalizations and trade-offs to capture pixel patterns that are associated with pedestrians both far away and close, as well as moving at different speeds.

The embodiments disclosed herein utilize a system or method capable of utilizing specialized perception networks for different situations/conditions and switching between them in order to improve situational perception performance of the ADS while limiting computational resource usage.

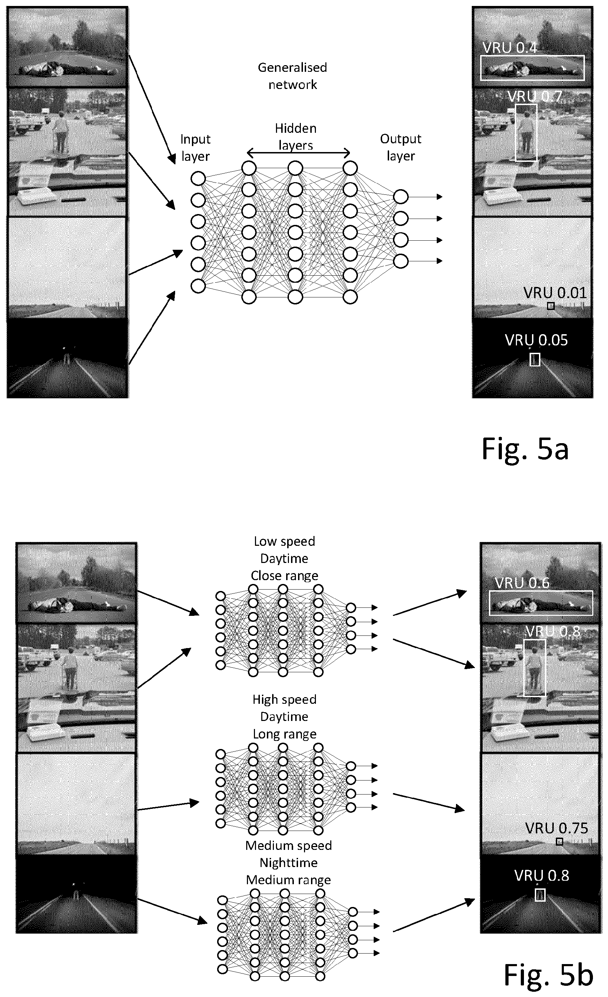

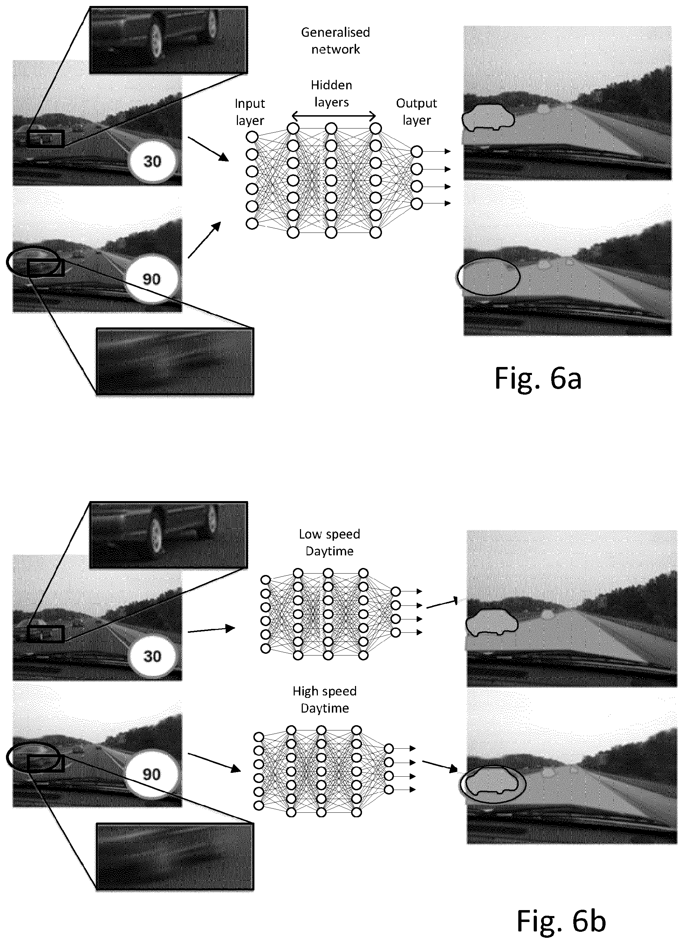

Figs. 5a-5b and 6a-6b are schematic illustrations that show how the specialized perception networks (Figs. 5b and 6b) can be used to improve the environment perception for a vehicle in specific traffic situations. In other words, the figures show how the incorporation of selected specialized networks can aid the environment perception functionality of the ADS in specific situations.

More specifically, Fig. 5a illustrates the perception output, in the form of VRU detection, from a generalized perception network for four different input images. As indicated in the figure, the generalized perception network has difficulties with detecting VRUs that are far away from the vehicle and in night-time conditions (bottom two images). So, as illustrated in Fig. 5b, by selecting a suitable specific perception network, the overall reliability of the environment perception of the ADS for these specific situations is improved. For the top two input images, one can select a specific perception network that is configured for optimal performance at low speed, daytime situations for close range detection of VRUs. For the third from the top input image, one can select a specific perception network that is configured for optimal performance at high speed, daytime situations for long range detection of VRUs, while for the bottom image, one can select a specific perception network that is configured for optimal performance at medium speed, night-time situations for medium range detection of VRUs.

Figs. 6a and 6b on the other hand illustrate a case where the perception output is in the form of segmentation, and how high speed (and motion blur of the wheels), as indicated in the bottom image, can negatively affect the perception output causing the generalized network to miss an object. Again, for the high speed situation, one can select a specific perception network that is configured for optimal performance at high speed, daytime situations for image segmentation.

An Automated Driving System (ADS) may be understood as hardware and software that are collectively capable of performing the dynamic driving task on a sustained basis. The ADS may comprise a level 3 feature or higher according to SAE J3016 levels of driving automation for on-road vehicles. The ADS may for example comprise various autonomous features or functions such as e.g. a traffic jam pilot, a highway pilot, or any other SAE J3016 level 3+ ADS feature. However, the ADS may comprise features or functions of any level according to SAE J3016 levels of driving automation for on-road vehicles that utilizes environment perception.

Thus, in the context of the present disclosure, an ADS-equipped vehicle may be understood as an autonomous vehicle, driver-less vehicle, or robotic vehicle, i.e. a vehicle incorporating vehicular automation, that is, a vehicle that is capable of sensing its environment and moving safely with little or no human input.

### Embodiments

Fig. 1 is a schematic flowchart representation of a (computer-implemented) method S100 for providing environment perception for a vehicle having an Automated Driving System (ADS) in accordance with some embodiments. In the present context, "environment perception" may be understood as the ADS's understanding of the world around the vehicle, i.e. the processed output of a collection of data from vehicle sensors. In more detail, "environment perception" may be understood as a function to enable the ADS of the vehicle that provides crucial information on the surrounding environment, such as e.g. free-space areas (or free drivable areas) and surrounding objects' locations, velocities, and predictions of their future states, and so forth. The vehicle may be any road vehicle such as a car (as illustrated herein), a motorcycle, a (cargo) truck, a bus, etc.

The ADS comprises a perception system having a generalized perception network comprising a generally trained machine-learning algorithm configured to provide a perception output for a scene depicted in one or more input images.

The ADS further comprises a plurality of specific perception networks, where each specific perception network comprises a specifically trained machine-learning algorithm configured to provide a perception output for a scene depicted in one or more input images. Moreover, each specifically trained machine-learning algorithm is trained with data associated with a specific traffic situation such that each specifically trained machine-learning algorithm is trained for a different traffic situation as compared to the other specifically trained machine-learning algorithms of the plurality of specific perception networks

"A perception output" may in the present context be understood as a perception functionality, a perception feature or a solution to a perception task. Accordingly, the perception output may be in the form of free-space estimation, object detection, object classification, semantic segmentation, instance segmentation, and so forth.

In some embodiments, the generally trained machine-learning algorithm is trained with a training dataset covering a larger variety of traffic situations than a training dataset used to train any one of the specifically trained machine-learning algorithms. Thus, the generalized perception network is capable of providing sufficiently accurate or reliable perception output over a larger variety of scenarios or situations that the vehicle may be exposed to as compared to the individual specific perception networks. However, this does not necessarily mean that the generally trained machine-learning algorithm has been trained with a greater number of data samples than each of the specifically trained machine-learning algorithms, but merely that the training data samples cover more varied (traffic) scenarios or situations.

The machine-learning algorithms of the perception networks may for example be in the form of artificial neural networks such as deep neural networks. The machine-learning algorithms (may also be referred to as machine-learning models, neural networks, and so forth) are implemented in some embodiments using publicly available suitable software development machine learning code elements, for example, such as those which are available in Python, Keras and TensorFlow or in any other suitable software development platform, in any manner known to be suitable to someone of ordinary skill in the art.

Moreover, with regards to the "specific perception networks", in accordance with some embodiments each specific perception network out of the plurality of specific perception networks is configured to handle a different perception task as compared to the other specific perception networks of the plurality of specific perception networks. Accordingly, the phrase "trained for a different traffic situation" in relation to the specifically trained machine-learning algorithms may comprise that the specific perception networks have different perception tasks. For example, one specific perception network may be configured to detect "partial pedestrians" in slow-moving traffic, another specific perception network may be configured to detect small vehicles when the vehicle is moving at high speed on a highway, another specific perception network may be configured to detect pedestrians at slow speed in poor lighting conditions (e.g. during night), another specific perception network may be configured to detect lane or road boundaries in snowy conditions, and so forth. This list is not to be understood as an exhaustive list, but as readily understood to someone of ordinary skill in the art, there are various specific perception tasks that can be applied in the context of the specific perception networks as disclosed herein. For example, a specifically trained machine-learning algorithm may configured to solve a perception task in relation to detection and/or classification of partial VRUs, road works, snow covered objects, specific country sign detection, or warning light detection.

Further, the method S100 comprises obtaining S101 sensor data from one or more vehicle-mounted sensors, the obtained sensor data comprising information about a surrounding environment of the vehicle. A vehicle-mounted sensor may for example be a monocular camera, a stereo camera, a radar device, a lidar device, an ultrasonic device, and so forth. Moreover, in some embodiments a vehicle-mounted sensor may be in the form of a gyroscope, an accelerometer, or an odometer. Thus, the sensor data may further comprise one or more vehicle state parameters such as a speed of the ego-vehicle, an orientation of the ego-vehicle, and so forth.

Moreover, the sensor data may be in the form of raw sensor data, or processed sensor data. Thus, the term "sensor data from one or more vehicle-mounted sensor" should be understood as term "sensor data originating from one or more vehicle-mounted sensor".

The method S100 further comprises selecting S102 one or more specific perception networks for activation out of the plurality of specific perception networks based on a current traffic situation indicated in the obtained S101 sensor data. For example, the obtained S101 sensor data may indicate a traffic situation in which the ego-vehicle and the surrounding vehicles are moving at slow speed (e.g. less than 10 km/h), that the traffic is dense, and that it is daytime lighting conditions. Accordingly, a specific perception network comprising a machine-learning algorithm specifically trained for that traffic situation is then suitably selected S102. The phrase "selecting one or more networks of activation" may be understood as a selection of one or more networks that are subsequently to be used for providing environment perception for the vehicle.

Accordingly, in some embodiments, each specific perception network is associated with a corresponding set of operational parameters, which define a traffic situation. The operational parameters (may also be referred to as scenario parameters herein) may for example comprise ego-state or vehicle state parameters (such as e.g. ego-vehicle speed), traffic density, type of road, time of day, weather conditions, or any Operational Design Domain (ODD) aspects. Thus, the step of selecting S102 one or more specific perception networks for activation may comprise comparing the sensor data with each corresponding set of operational parameters and selecting the one or more specific perception networks for activation out of the plurality of specific perception networks based on the comparison. Preferably, the selection is made so that the one or more specific perception networks that have operational parameters that best correspond to the current operational parameters as inferred from the obtained S101 sensor data.

An Operational design domain (ODD) is to be understood as a description of the operating domains in which an automated or a semi-automated driving system (i.e. AD or ADAS) is designed to function, including, but not limited to, geographic, roadway (e.g. type, surface, geometry, edges and markings), environmental parameters, connectivity, surrounding objects, and speed limitations. That is, the ADS feature may be associated with a specific environmental scenario and only configured to operate within an environment fulfilling a set of scenario parameters, example scenarios are traffic jams, highway/expressway cruising, etc. The ODD may further define an allowable exposure rate to driving scenarios and their dynamics (e.g. traffic lights, intersections, jaywalkers, snow, ice, cut-ins, large animals, etc.). The scenario parameters may for example be obtained from sensor data from one or more vehicle-mounted sensors or communication data obtained from a remote server, or another vehicle via a Vehicle-to-Vehicle (V2V) communication protocol. The scenario parameters may for example be type of road, weather data, speed limitations, traffic density, number of available lanes, presence of road work, and so forth.

In some embodiments, the obtained S101 sensor data further comprises information about one or more vehicle state parameters (such as a a current speed of the vehicle) and map data (e.g. HD map data) of the surrounding environment of the vehicle.

Moreover, in some embodiments, the method S100 may further comprise determining a set of current operational parameters based on the obtained sensor data. Accordingly, the step of comparing the sensor data with each corresponding set of operational parameters may comprise comparing the determined set of current operational parameters with each corresponding set of operational parameters and selecting the one or more specific perception networks for activation out of the plurality of specific perception networks whose set of operational parameters (best) correspond to the determined set of current operational parameters. In other words, the one or more selected specific perception networks are the ones which is/are associated with the operational parameters that have the highest similarity to the determined set of current operational parameters.

In some embodiments, the specific traffic situations (that the plurality of specific perception networks are configured for) comprise different ranges of the current speed of the vehicle. Thus, in a simple example embodiment, the specifically trained machine-learning algorithms of the plurality of specific perception networks may be trained for different ranges of the current ego-vehicle speed. For example, a first specifically trained machine-learning algorithm may be trained to provide a perception output for when the vehicle is traveling at speed of 0-20 km/h, a second specifically trained machine-learning algorithm may be trained to provide a perception output for when the vehicle is traveling at speed of 21-60 km/h, a third specifically trained machine-learning algorithm may be trained to provide a perception output for when the vehicle is traveling at speed of 61-120 km/h. Thus, depending on the ego-vehicle speed as indicated in the obtained S101 sensor data, one of the three specific perception networks is selected.

However, in some embodiments, the different ranges of the current ego-vehicle speed are overlapping. For example, a first specifically trained machine-learning algorithm may be trained to provide a perception output for when the vehicle is traveling at speed of 0-25 km/h, a second specifically trained machine-learning algorithm may be trained to provide a perception output for when the vehicle is traveling at speed of 15-65 km/h, a third specifically trained machine-learning algorithm may be trained to provide a perception output for when the vehicle is traveling at speed of 60-120 km/h. Thereby, potential negative effects on the environment perception functionality of the ADS during transitions/switching between the specific perception networks may be alleviated. For example, in slow stop-and-go traffic where speeds remain below 20 km/h there will be no switching (if the first specific perception network is the active network). Likewise, if there is a slow flow and the second specific perception network is active, the system will not switch to the first specific perception network until the ego-vehicle speed goes below 15 km/h.

Moreover, in some embodiments, the ADS further comprises a plurality of machine-learning classification systems comprising a corresponding machine-learning classification system for each specific perception network, wherein each machine-learning classification system is trained on the same dataset as a corresponding specific perception network. Accordingly, the step of selecting one or more specific perception networks for activation may comprise feeding the obtained sensor data to each corresponding machine-learning classification system in order to distinguish S107 new experiences from experiences known to each machine-learning classification system in the obtained sensor data and to output an anomaly value indicative of a level of matching between the current traffic situation and a traffic situation that the corresponding specific perception network is trained for, and selecting the one or more specific perception networks for activation out of the plurality of specific perception networks based on each output anomaly value.

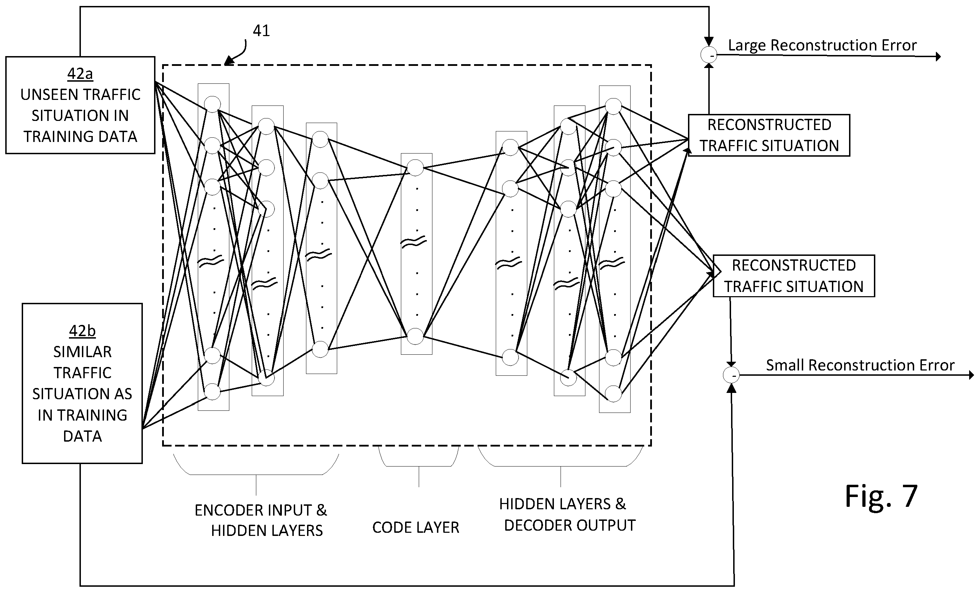

Each machine-learning classification system may for example comprise an autoencoder (see e.g. ref. 41 in Fig. 7) trained on the same dataset as the respective corresponding specific perception network, and the anomaly value may be a reconstruction error.

Turning briefly to Fig. 7, which shows in more detail how an autoencoder machine learning model 41, which is fed input similar to its training data and input which is not similar to its training data can be used to infer if a specific perception network should be selected for a current traffic situation according to some embodiments of the disclosed technology. In particular, it can be used to infer if the current operational parameters (as indicated in the obtained sensor data) correspond to the operational parameters of a specific perception network.

When the autoencoder output is compared to the input, a large reconstruction error occurs if that input comprise input 42a whereas a low reconstruction error occurs if the input comprises input 42b (meaning the input data resembles the data that the autoencoder and consequently the corresponding specific perception network has been trained with). The reconstruction error may be used to generate a training data similarity score for the input accordingly, in which the value of the training data similarity score can be used to determine if the corresponding specific perception network should be selected for activation. High reconstruction errors correspond to the input 42a on which basis a low training data similarity score is assigned for the corresponding specific perception network. If, the reconstruction error is low, it means the input data segment 42b contains features which are similar to features of the training data that was used to train the corresponding specific perception network (and the autoencoder). The machine-learning classification system then outputs a training data similarity score for that input data segment 42b. The degree of similarity between the input and output can be determined based on any technique for calculating a reconstruction error known to someone of ordinary skill in the art.

Moreover, in some embodiments, the selection S102 of the one or more specific perception networks for activation may be based on an output from a clustering algorithm. Here, the clustering algorithm may have been configured to form N-dimensional clusters based on the training data sets used for the training of the specifically trained machine-learning algorithms of the plurality of specific perception networks. The obtained sensor data may accordingly be fed to the clustering algorithm which maps the obtained sensor data to the formed clusters in order to derive a training data similarity score relative to each cluster. A high training data similarity score would indicate a high correlation between the obtained S101 sensor data and the specific traffic situation that a specifically trained machine-learning algorithm has been trained for.

Reverting back to Fig. 1, the method S100 further comprises feeding S103 at least a portion of the obtained sensor data to each of the selected S102 one or more specific perception networks and to the generalized perception network in order to obtain an output from each of the selected one or more specific perception networks and the generalized perception network. It should be noted that only a portion of the obtained sensor data may be fed as input to each of the selected S102 one or more specific perception networks and to the generalized perception network. This is because a larger dataset (of the obtained sensor data) can be used for the selection S102, while only a subset of all available sensor data may be relevant to feed to the selected S102 one or more specific perception networks and to the generalized perception network. For example, during the selection S102 process, various types of data may be used to determine the current state of the vehicle and the surrounding environment (e.g. camera images, map data, lidar data, accelerometer data), while only camera images may be relevant to feed as input to the selected S102 one or more specific perception networks and to the generalized perception network.

In some embodiments, the step of feeding at least the portion of the obtained sensor data comprises controlling S108 one or more switches so to feed a data stream comprising at least the portion of the obtained sensor data only to the selected one or more specific perception networks and to the generalized perception network.

Moreover, in some embodiments, the specifically trained machine-learning algorithms of the plurality of specific perception networks are artificial neural networks that share a common network architecture, each artificial neural network having an individual weights-matrix for the common network architecture. Accordingly, the step of feeding at least the portion of the obtained sensor data may comprise switching S109 the weights-matrix (trained weights) of the common network architecture in accordance with the selected one or more specific perception networks. An advantage of having specific perception networks that are artificial neural networks that share a common network architecture, and switching between the networks by switching the weights-matrix of the common network architecture is that it can reduce the need for system resources.

Further, the method S100 comprises fusing S104 the obtained outputs from each of the selected one or more specific perception networks and the generalized perception network. The fused S104 output comprises one or more perception output in relation to the surrounding environment of the vehicle. In some embodiments, the fused S104 output always comprises the output from the generalized perception network. In the present context, the term "fusing" the obtained outputs may be construed as a process of combining the different data sets so that the subsequent systems that process the data for making decisions and/or controlling the vehicle performs better than had it just been given either one of the datasets. In the present context the fusing S104 of the obtained outputs may be in the form of feature and/or decision-level data fusion using suitable data fusion techniques include artificial neural networks, evolutionary algorithms, particle swarm optimization, decision tree, clustering algorithms, fuzzy logic inference, object matching algorithms, and voting algorithms, as readily appreciated by a skilled person in the art. However, in some embodiments the fusion S104 may be an addition of outputs.

Moreover, an advantage of combining the output from the generalized perception network and the selected specific perception network(s) is that the baseline performance level of the environment perception functionality of the ADS is maintained at a high level while getting high-level performance for a specifically critical perception task in any given situation. Thereby improving the overall environment perception functionality of the ADS across a wide variety of traffic scenarios and situations, thereby providing a more performant and safer ADS. Moreover, another advantage of combining the output from the generalized perception network and the selected specific perception network(s) is that potential negative effects on the environment perception functionality of the ADS during transitions/switching between the specific perception networks may be alleviated.

Furthermore, the method comprises transmitting S105 the fused S104 output to a (different) module of the ADS. For example, the fused S104 output may be transmitted S104 to a decision and control module of the ADS so to control (i.e. manoeuvre) the vehicle based on information comprised in the fused S104 output. However, in some embodiments, the fused S104 output may be transmitted S104 to a module of the ADS configured to display or notify the driver of a traffic situation via an Human-Machine Interface (HMI) of the vehicle based on information comprised in the fused S104 output. Moreover, in some embodiments, the fused S104 output may be transmitted S104 to another perception functionality of the ADS such as e.g. an object tracking algorithm.

Executable instructions for performing these functions are, optionally, included in a non-transitory computer-readable storage medium or other computer program product configured for execution by one or more processors.

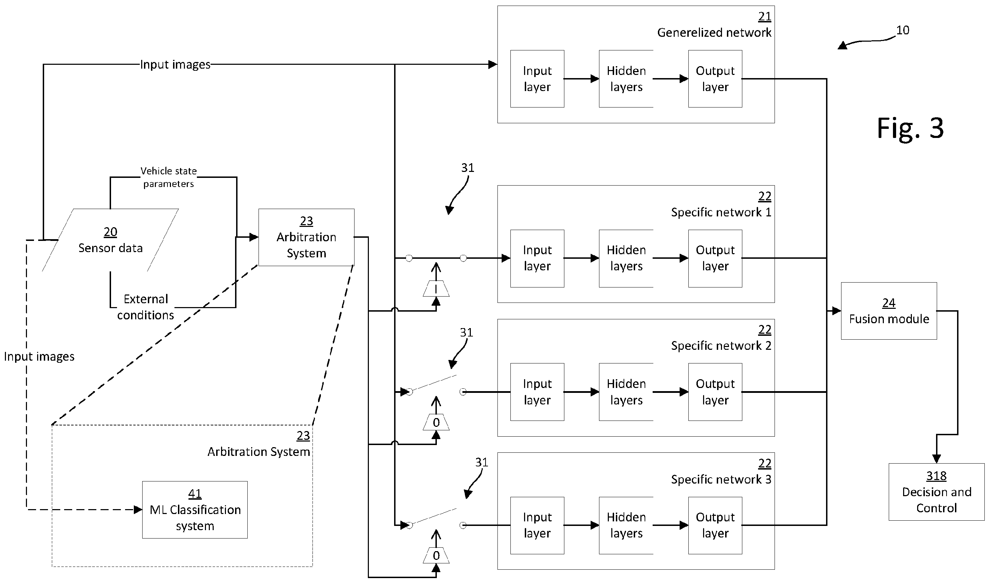

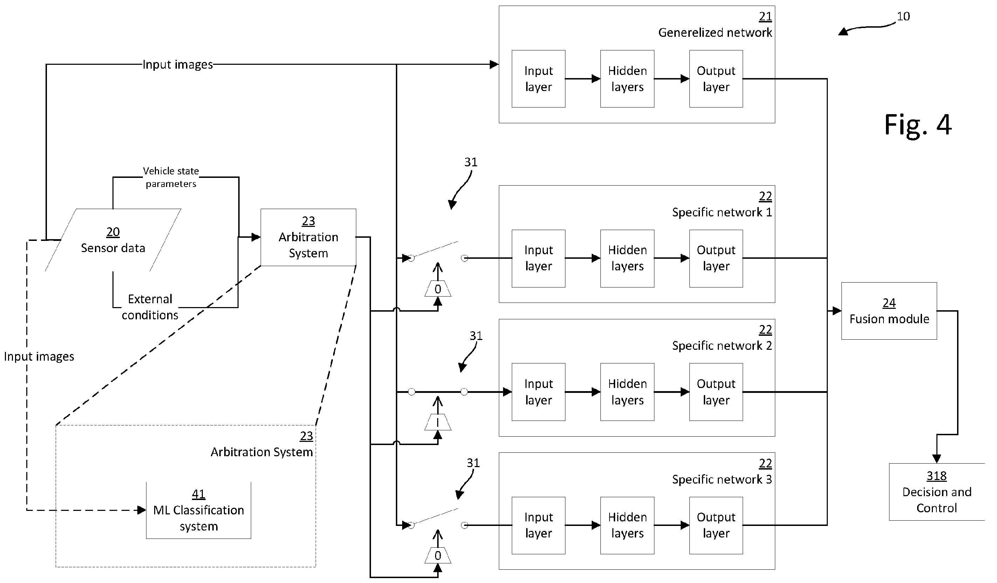

Figs. 3 and 4 are schematic block diagram representations of a system 10 for providing environment perception for a vehicle in accordance with some embodiments. The system 10 comprises a generalized perception network 21 and a plurality of specific perception networks 22. The generalized perception network has a generally trained machine-learning algorithm configured to provide perception characteristics for a scene depicted in one or more input images. Each specific perception network has a specifically trained machine-learning algorithm configured to provide a perception output for a scene depicted in one or more input images. Moreover, each specifically trained machine-learning algorithm is trained with data associated with a specific traffic situation such that each specifically trained machine-learning algorithm is trained for a different traffic situation as compared to the other specifically trained machine-learning algorithms of the plurality of specific perception networks.

In general, Figs. 3 and 4 serve to further elucidate the above-described embodiments related to the selection and switching process for providing environment perception for a vehicle by schematically illustrating the flow of information and the various process steps. The system 10 comprises control circuitry 11 (e.g. one or more processors) configured to perform the functions of the methods disclosed herein, where the functions may be included in a non-transitory computer-readable storage medium 12 or other computer program product configured for execution by the control circuitry 11. Stated differently, the control circuitry 11 of the apparatus 10 may be configured to execute the instructions stored in a computer-readable storage medium to perform the method discussed in in the foregoing. However, in order to better elucidate the present invention, the control circuitry 11 is represented as various software/hardware modules 24 or systems 23 each of them linked to one or more specific functions of the control circuitry 11. Figs. 3 and 4 are substantially similar and mainly serve to how the system 10 acts for two different traffic situations, where the system in Fig. 3 has a selected first specific perception network to be active, while in Fig. 4 a second specific perception network is selected to be active.

In some embodiments, the control circuitry 11 is configured to obtain sensor data 20 from one or more vehicle-mounted sensors, where the obtained sensor data comprising information about a surrounding environment of the vehicle. As mentioned, the sensor data may further comprise information about one or more vehicle state parameters (e.g. a current speed of the vehicle) and map data associated with the surrounding environment of the vehicle.

The control circuitry 11 is further configured to select one or more specific perception networks 22 for activation out of the plurality of specific perception networks 22 based on a current traffic situation indicated in the obtained sensor data 20. Furthermore, the control circuitry 11 is configured to feed at least a portion of the obtained sensor data 20 to each of the selected one or more specific perception networks and to the generalized perception network 21 in order to obtain an output from each of the selected one or more specific perception networks and the generalized perception network 21.

Here, the control circuitry 11 may be configured to control the selection of the one or more specific perception networks 22 or to control the feeding of the sensor data to the selected one or more specific perception networks by controlling one or more switches 31 so to feed a data stream comprising at least the portion of the obtained sensor data only to the selected one or more specific perception networks and to the generalized perception network. In other words, the control circuitry 11 may be configured to control which of the specific perception networks 22 that is to be active by controlling a set of switches 31.

The selection of which one or more specific perception networks 22 that is/are to be active may for example be realized by a suitably configured arbitration system/module/algorithm 23.

In some embodiments, each specific perception network 22 is associated with a corresponding set of operational parameters. Accordingly, the control circuitry 11 (or the arbitration system 23) may be configured to compare the sensor data with each corresponding set of operational parameters and selecting the one or more specific perception networks for activation out of the plurality of specific perception networks based on the comparison.

Moreover, in some embodiments, the control circuitry 11 (or the arbitration system 23) is configured to determining a set of current operational parameters based on the obtained sensor data, and to compare the determined set of current operational parameters with each corresponding set of operational parameters. Accordingly, the control circuitry 11 (or the arbitration system 23) may be configured to select the one or more specific perception networks for activation out of the plurality of specific perception networks whose set of operational parameters (best) correspond to the determined set of current operational parameters.

However, in some embodiments, the control circuitry 11 may be configured to employ a plurality of machine-learning classification systems 41 comprising a corresponding machine-learning classification system 41 for each specific perception network, where each machine-learning classification system 41 is trained on the same dataset as a corresponding specific perception network 22. In other words, the arbitration system 23 may comprise the plurality of machine-learning classification systems 41.

Accordingly, the control circuitry 11 may be configured to select the one or more specific perception networks for activation by feeding the obtained sensor data to each corresponding machine-learning classification system in order to distinguish new experiences from experiences known to each machine-learning classification system in the obtained sensor data, and to output an anomaly value indicative of a level of matching between the current traffic situation and a traffic situation that the corresponding specific perception network is trained for. Accordingly, the control circuitry 11 may be configured to select the one or more specific perception networks for activation out of the plurality of specific perception networks based on each output anomaly value.

The machine-learning classification systems may be in the form of autoencoders, and the anomaly values in the form of a reconstruction error.

Further, the control circuitry 11 is configured to fuse (e.g. by means of a fusion module 24) the obtained outputs from each of the selected one or more specific perception networks and the generalized perception network. The fused output accordingly comprises one or more perception output (e.g. object detections, object classification, segmentations, free-space estimations, etc.) in relation to the surrounding environment of the vehicle. The fusion module 24 may employ any suitable data fusion technique as known in the art, such as e.g. the use of artificial neural networks, evolutionary algorithms, particle swarm optimization, decision tree, clustering algorithms, fuzzy logic inference, object matching algorithms, and voting algorithms, as readily appreciated by a skilled person in the art.

Further, the control circuitry 11 is configured to transmit the fused output to a module of an Automated Driving System (ADS) of the vehicle 1. In some embodiments, the fused output is transmitted to a decision and control module 318 of the ADS for controlling the vehicle based on the fused output. In some embodiments, the fused output is transmitted to another perception module/function (e.g. an object tracking algorithm) for further processing. The further processed output may then be transmitted to the decision and control module 318 of the ADS for controlling the vehicle. Alternatively, or additionally, the fused output may be transmitted to a human-machine-interface (HMI) of the vehicle in order to notify an occupant of the vehicle of the environment perception of the vehicle. The HMI may for example comprise an audio transducer, a tactile transducer, and/or a graphical display.

In some embodiments, the switching architecture (i.e. the switches 31) may be placed at the output of the specific perception networks 22 and thereby control which of the specific perception networks 22 that is to be active by controlling which of the perception outputs that are to be fused/combined to form the fused output. This may further reduce any potential negative effects on the environment perception functionality of the ADS during transitions/switching between the specific perception networks since the output from each and every specific perception network is readily available at any time.

In short, the system 10 may be understood as an architecture that allows switch/controlling which perception software that is/are active depending on a situation that the vehicle is currently exposed to. The specific perception networks 22 may as mentioned comprise specifically trained machine-learning algorithms that are trained and optimized on data for specific purposes. Such specific situations can be determined using any combination of the following factors (but not limited to): ego speed (camera settings/speed), traffic situations, road conditions, environmental conditions (illumination, weather), traffic conditions, time, geographic location, sensor condition, and so forth.

The logical flow in relation to Figs. 3 and 4 may be summarized as follows.

Data from the perception system (e.g. processed or raw sensor data from one or more cameras, lidars, radar, ultrasonic sensors, etc.) and optionally other sensors outputting information about one or more vehicle state parameters (e.g. current speed of ego-vehicle) and map data are used to select which of the specific perception networks that is/are most suitable to be active. In other words, the sensor data, and optionally, the vehicle state parameters and map data are used to determine which situation or state that the vehicle is in. This arbitration, that decides which specific network(s) is/are to be active may consider any operational/situational parameters. The operational/situational parameters include but are not limited to ego state such as speed, traffic situation, road type, weather condition, location, and any other ODD aspects. However, in some embodiments, the arbitration is made by checking a similarity between the sensor data and the training data consumed by the specifically trained machine-learning algorithms by utilizing a plurality of machine-learning classification systems

Then, based on the selection process above, the selected networks are fed with appropriate input data (e.g. one or more camera images captured by a vehicle-mounted camera). It should be noted that the input and the usage of the technology disclosed herein is not limited to camera and vision applications, but may also be use data from other sensors (lidar, radar, ultrasonic, etc.) as input.

The active networks' output are consumed by a fusion module 24 that combined the output from the active networks. The output from the fusion module 24 may subsequently be used as input by other perception functions (e.g. object tracking algorithms or for further fusion with data from other sensors). In other words, the fusion module 24 combines the outputs from the active networks and feeds/transmits the fused output to a subsequent step in the processing. In some embodiments, the fusion is an addition of outputs. Thereby, the use of complex fusion networks are avoided and performance of the situation specific networks are included in the combined output. Even if the generalized network 21 includes a fusion network. However, in some embodiments, the fusion module 24 may include more complex functionality, such as e.g., object matching, voting based systems, etc.

As mentioned, in some embodiments, all of the perception networks 21, 22 are fed with the input data while only the output from the selected specific perception networks and the generalized network is allowed to be relayed to the fusion module 24.

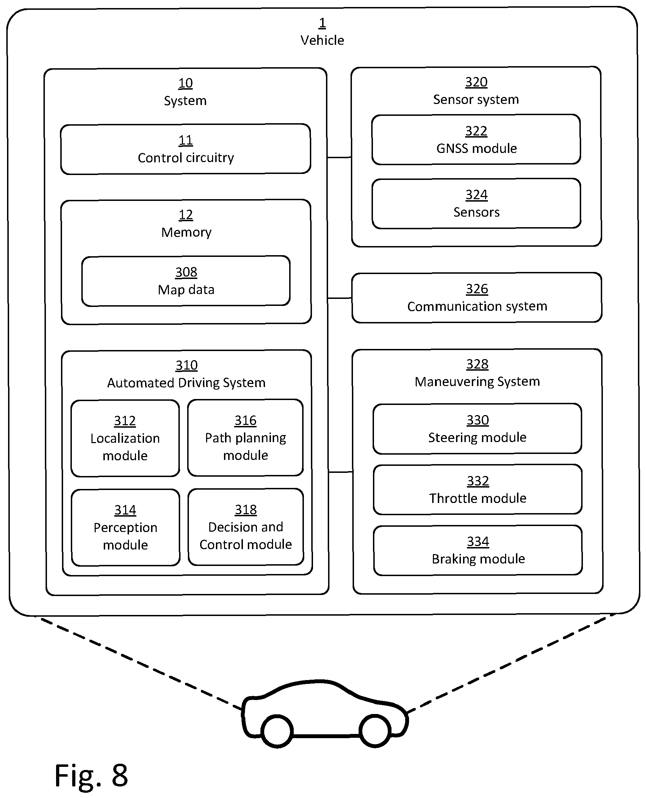

Fig. 8 is a schematic illustration of an ADS-equipped vehicle 1 comprising a system 10 for providing environment perception for a vehicle 1 in accordance with some embodiments. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to some embodiments, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 8. Moreover, the vehicle 1 may comprise further elements than those shown in Fig. 8. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 8 should be seen merely as an illustrative example, as the elements of the vehicle 1 can be realized in several different ways.

The vehicle 1 further comprises a sensor system 320. The sensor system 320 is configured to acquire sensory data about the vehicle itself and/or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output to a remote location (e.g. remote operator or control center) by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. In some embodiments, the system 10 for providing environment perception for a vehicle 1 may be implemented as an integrated or integral component of the perception module 314 of the ADS 310.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the abovediscussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

Accordingly, it should be understood that parts of the described solution may be implemented either in the vehicle 1, in a system located external the vehicle 1, or in a combination of internal and external the vehicle; for instance in a server in communication with the vehicle, a so called cloud solution. For instance, sensor data may be sent to an external system and that system performs the steps to select one or more specific perception networks for activation. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining steps, selecting steps, feeding steps and fusing steps, comparing steps, and transmitting steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for providing environment perception for a vehicle having an Automated Driving System (ADS), wherein the ADS comprises:
a generalized perception network (21) comprising a generally trained machine-learning algorithm configured to provide a perception output for a scene depicted in one or more input images, and
a plurality of specific perception networks (22), each specific perception network comprising a specifically trained machine-learning algorithm configured to provide a perception output for a scene depicted in one or more input images, wherein each specifically trained machine-learning algorithm is trained with data associated with a specific traffic situation such that each specifically trained machine-learning algorithm is trained for a different traffic situation as compared to the other specifically trained machine-learning algorithms of the plurality of specific perception networks;
wherein the method (S100) comprises:
obtaining (S101) sensor data from one or more vehicle-mounted sensors, the obtained sensor data comprising information about a surrounding environment of the vehicle, the obtained sensor data comprising one or more images captured by a vehicle-mounted camera;
selecting (S102) one or more specific perception networks for activation out of the plurality of specific perception networks based on a current traffic situation indicated in the obtained sensor data;
feeding (S103) at least one portion of the obtained sensor data to each of the selected one or more specific perception networks and to the generalized perception network in order to obtain an output from each of the selected one or more specific perception networks and the generalized perception network, the at least one portion of the obtained sensor data comprising the one or more images captured by the vehicle-mounted camera;
fusing (S104) the obtained outputs from each of the selected one or more specific perception networks and the generalized perception network, the fused output comprising one or more perception outputs in relation to the surrounding environment of the vehicle;
transmitting (S105) the fused output to a module of the ADS.

2. The method (S100) according to claim 1, wherein the generally trained machine-learning algorithm is trained with a training dataset covering a larger variety of traffic situations than a training dataset used to train any one of the specifically trained machine-learning algorithms.

3. The method (S100) according to claim 1 or 2, wherein the obtained (S101) sensor data further comprises information about a current speed of the vehicle and map data of the surrounding environment of the vehicle.

4. The method (S100) according to claim 3, wherein the specific traffic situations comprise different ranges of the current speed of the vehicle.

5. The method (S100) according to any one of claims 1-3, wherein the specific traffic situation is one of a traffic jam situation, a high-speed highway situation, a night-time driving situation, a rainy conditions driving situation, or a snowy conditions driving situation.

6. The method (S100) according to any one of claims 1-5, wherein the step of feeding at least the portion of the obtained sensor data comprises:
controlling (S108) one or more switches so to feed a data stream comprising the at least one portion of the obtained (S101) sensor data only to the selected (S102) one or more specific perception networks and the generalized perception network.

7. The method (S100) according to any one of claims 1-5, wherein the specifically trained machine-learning algorithms of the plurality of specific perception networks are artificial neural networks that share a common network architecture, each artificial neural network having an individual weights-matrix for the common network architecture, and wherein the step of feeding at least the portion of the obtained sensor data comprises:
switching (S109) the weights-matrix of the common network architecture in accordance with the selected one or more specific perception networks.

8. The method (S100) according to any one of claims 1-7, wherein each specific perception network is associated with a corresponding set of operational parameters, and wherein the step of selecting one or more specific perception networks for activation comprises:
comparing (S106) the sensor data with each corresponding set of operational parameters and selecting the one or more specific perception networks for activation out of the plurality of specific perception networks based on the comparison.

9. The method (S100) according to claim 8, further comprising:
determining a set of current operational parameters based on the obtained sensor data; and
wherein the step of comparing (S106) the sensor data with each corresponding set of operational parameters comprises:
comparing the determined set of current operational parameters with each corresponding set of operational parameters and selecting the one or more specific perception networks for activation out of the plurality of specific perception networks whose set of operational parameters correspond to the determined set of current operational parameters.

10. The method (S100) according to any one of claims 1-7, wherein the ADS further comprises a plurality of machine-learning classification systems comprising a corresponding machine-learning classification system for each specific perception network, wherein each machine-learning classification system is trained on the same dataset as a corresponding specific perception network, and wherein the step of selecting one or more specific perception networks for activation comprises:
feeding the obtained sensor data to each corresponding machine-learning classification system in order to distinguish (S107) new experiences from experiences known to each machine-learning classification system in the obtained sensor data and to output an anomaly value indicative of a level of matching between the current traffic situation and a traffic situation that the respective corresponding specific perception network is trained for;
selecting (S102) the one or more specific perception networks for activation out of the plurality of specific perception networks based on each output anomaly value.

11. The method (S100) according to claim 10, wherein each machine-learning classification system comprises an autoencoder (41) trained on the same dataset as the corresponding specific perception network, and wherein the anomaly value is a reconstruction error.

12. A computer program product comprising instructions which, when the program is executed by a computing device, causes the computer to carry out the method (S100) according to any one of claims 1-11.

13. A computer-readable storage medium comprising instructions which, when executed by a computing device, causes the computer to carry out the method (S100) according to any one of claims 1-11.

14. A system (10) for providing environment perception for a vehicle (1), the system (10) comprising:
a generalized perception network (21) comprising a generally trained machine-learning algorithm configured to provide perception characteristics for a scene depicted in one or more input images;
a plurality of specific perception networks (22), each specific perception network comprising a specifically trained machine-learning algorithm configured to provide a perception output for a scene depicted in one or more input images, wherein each specifically trained machine-learning algorithm is trained with data associated with a specific traffic situation such that each specifically trained machine-learning algorithm is trained for a different traffic situation as compared to the other specifically trained machine-learning algorithms of the plurality of specific perception networks; and
control circuitry (11) configured to:
obtain sensor data (20) from one or more vehicle-mounted sensors, the obtained sensor data comprising information about a surrounding environment of the vehicle, the obtained sensor data comprising one or more images captured by a vehicle-mounted camera;
select one or more specific perception networks (22) for activation out of the plurality of specific perception networks based on a current traffic situation indicated in the obtained sensor data (20);
feed at least a portion of the obtained sensor data (20) to each of the selected one or more specific perception networks and to the generalized perception network in order to obtain an output from each of the selected one or more specific perception networks and the generalized perception network, the at least one portion of the obtained sensor data comprising the one or more images captured by the vehicle-mounted camera;
fuse the obtained outputs from each of the selected one or more specific perception networks and the generalized perception network (21), the fused output comprising one or more perception outputs in relation to the surrounding environment of the vehicle;
transmit the fused output to a module of an Automated Driving System (ADS) of the vehicle.

15. A vehicle (1) comprising a system (10) according to claim 14.

## Patentansprüche

1. Computerimplementiertes Verfahren (S100) zum Bereitstellen von Umgebungswahrnehmung für ein Fahrzeug, das ein automatisiertes Fahrsystem (ADS) aufweist, wobei das ADS Folgendes umfasst:
ein generalisiertes Wahrnehmungsnetzwerk (21), das einen allgemein trainierten Maschinenlernalgorithmus umfasst, der dazu konfiguriert ist, eine Wahrnehmungsausgabe für eine Szene bereitzustellen, die in einem oder mehreren Eingabebildern abgebildet ist, und
eine Vielzahl von spezifischen Wahrnehmungsnetzwerken (22), wobei jedes spezifische Wahrnehmungsnetzwerk einen spezifisch trainierten Maschinenlernalgorithmus umfasst, der dazu konfiguriert ist, eine Wahrnehmungsausgabe für eine Szene bereitzustellen, die in einem oder mehreren Eingabebildern abgebildet ist, wobei jeder spezifisch trainierte Maschinenlernalgorithmus mit Daten trainiert ist, die einer spezifischen Verkehrssituation zugeordnet sind, sodass jeder spezifisch trainierte Maschinenlernalgorithmus im Vergleich zu den anderen spezifisch trainierten Maschinenlernalgorithmen der Vielzahl von spezifischen Wahrnehmungsnetzwerken für eine andere Verkehrssituation trainiert ist;
wobei das Verfahren (S100) ferner Folgendes umfasst:
Erlangen (S101) von Sensordaten von einem oder mehreren fahrzeugmontierten Sensoren, wobei die erlangten Sensordaten Informationen über eine umliegende Umgebung des Fahrzeugs umfassen und die erlangten Sensordaten ein oder mehrere Bilder umfassen, die durch eine fahrzeugmontierte Kamera aufgenommen werden;
Auswählen (S102) eines oder mehrerer spezifischer Wahrnehmungsnetzwerke zur Aktivierung aus der Vielzahl von spezifischen Wahrnehmungsnetzwerken basierend auf einer aktuellen Verkehrssituation, die in den erlangten Sensordaten angegeben ist;
Zuführen (S103) von mindestens einem Teil der erlangten Sensordaten zu jedem des einen oder der mehreren ausgewählten spezifischen Wahrnehmungsnetzwerke und zu dem generalisierten Wahrnehmungsnetzwerk, um eine Ausgabe von jedem des einen oder der mehreren ausgewählten spezifischen Wahrnehmungsnetzwerke und dem generalisierten Wahrnehmungsnetzwerk zu erlangen, wobei der mindestens eine Teil der erlangten Sensordaten das eine oder die mehreren Bilder umfasst, die durch die fahrzeugmontierte Kamera aufgenommen werden;
Fusionieren (S104) der erlangten Ausgaben aus jedem des einen oder der mehreren ausgewählten spezifischen Wahrnehmungsnetzwerke und dem generalisierten Wahrnehmungsnetzwerk, wobei die fusionierte Ausgabe eine oder mehrere Wahrnehmungsausgaben in Bezug auf die umliegende Umgebung des Fahrzeugs umfasst;
Übertragen (S105) der fusionierten Ausgabe an ein Modul des ADS.

2. Verfahren (S100) nach Anspruch 1, wobei der allgemein trainierte Maschinenlernalgorithmus mit einem Trainingsdatensatz trainiert ist, der eine größere Vielfalt von Verkehrssituationen abdeckt als ein Trainingsdatensatz, der zum Trainieren eines der spezifisch trainierten Maschinenlernalgorithmen verwendet wird.

3. Verfahren (S100) nach Anspruch 1 oder 2, wobei die erlangten (S101) Sensordaten ferner Informationen über eine aktuelle Geschwindigkeit des Fahrzeugs und Kartendaten der umliegenden Umgebung des Fahrzeugs umfassen.

4. Verfahren (S100) nach Anspruch 3, wobei die spezifischen Verkehrssituationen unterschiedliche Bereiche der aktuellen Geschwindigkeit des Fahrzeugs umfassen.

5. Verfahren (S100) nach einem der Ansprüche 1-3, wobei die spezifische Verkehrssituation eine von einer Verkehrstausituation, einer Hochgeschwindigkeitsautobahnsituation, einer Fahrsituation bei Nacht, einer Fahrsituation bei regnerischen Bedingungen oder einer Fahrsituation mit Schneebedingungen ist.

6. Verfahren (S100) nach einem der Ansprüche 1-5, wobei der Schritt des Zuführens von mindestens dem Teil der erlangten Sensordaten Folgendes umfasst:
Steuern (S108) von einem oder mehreren Schaltern, um so einen Datenstrom, der den mindestens einen Teil der erlangten (S101) Sensordaten umfasst, nur dem einen oder den mehreren ausgewählten (S102) spezifischen Wahrnehmungsnetzwerken und dem generalisierten Wahrnehmungsnetzwerk zuzuführen.

7. Verfahren (S100) nach einem der Ansprüche 1-5, wobei die spezifisch trainierten Maschinenlernalgorithmen der Vielzahl von spezifischen Wahrnehmungsnetzwerken künstliche neuronale Netzwerke sind, die eine gemeinsame Netzwerkarchitektur teilen, wobei jedes künstliche neuronale Netzwerk eine individuelle Gewichtungsmatrix für die gemeinsame Netzwerkarchitektur aufweist und wobei der Schritt des Zuführens von mindestens dem Teil der erlangten Sensordaten Folgendes umfasst:
Umschalten (S109) der Gewichtungsmatrix der gemeinsamen Netzwerkarchitektur in Übereinstimmung mit dem einen oder den mehreren ausgewählten spezifischen Wahrnehmungsnetzwerken.

8. Verfahren (S100) nach einem der Ansprüche 1-7, wobei jedes spezifische Wahrnehmungsnetzwerk einem entsprechenden Satz von Betriebsparametern zugeordnet ist und wobei der Schritt des Auswählens von einem oder mehreren spezifischen Wahrnehmungsnetzwerken zur Aktivierung Folgendes umfasst:
Vergleichen (S106) der Sensordaten mit jedem entsprechenden Satz von Betriebsparametern und Auswählen des einen oder der mehreren spezifischen Wahrnehmungsnetzwerke zur Aktivierung aus der Vielzahl von spezifischen Wahrnehmungsnetzwerken basierend auf dem Vergleich.

9. Verfahren (S100) nach Anspruch 8, ferner umfassend:
Bestimmen eines Satzes von aktuellen Betriebsparametern basierend auf den erlangten Sensordaten; und
wobei der Schritt des Vergleichens (S106) der Sensordaten mit jedem entsprechenden Satz von Betriebsparametern Folgendes umfasst:
Vergleichen des bestimmten Satzes von aktuellen Betriebsparametern mit jedem entsprechenden Satz von Betriebsparametern und Auswählen des einen oder der mehreren spezifischen Wahrnehmungsnetzwerke zur Aktivierung aus der Vielzahl von spezifischen Wahrnehmungsnetzwerken, dessen/deren Satz von Betriebsparametern dem bestimmten Satz von aktuellen Betriebsparametern entspricht.

10. Verfahren (S100) nach einem der Ansprüche 1-7, wobei das ADS ferner eine Vielzahl von Maschinenlernklassifizierungssystemen umfasst, die ein entsprechendes Maschinenlernklassifizierungssystem für jedes spezifische Wahrnehmungsnetzwerk umfasst, wobei jedes Maschinenlernklassifizierungssystem mit demselben Datensatz wie ein entsprechendes spezifisches Wahrnehmungsnetzwerk trainiert ist und wobei der Schritt des Auswählens von einem oder mehreren spezifischen Wahrnehmungsnetzwerken zur Aktivierung Folgendes umfasst:
Zuführen der erlangten Sensordaten zu jedem entsprechenden Maschinenlernklassifizierungssystem, um neue Erfahrungen von Erfahrungen, die jedem Maschinenlernklassifizierungssystem bekannt sind, in den erlangten Sensordaten zu unterscheiden (S107) und einen Anomaliewert auszugeben, der ein Übereinstimmungsniveau zwischen der aktuellen Verkehrssituation und einer Verkehrssituation, für die das jeweilige entsprechende spezifische Wahrnehmungsnetzwerk trainiert ist, angibt;
Auswählen (S102) des einen oder der mehreren spezifischen Wahrnehmungsnetzwerke zur Aktivierung aus der Vielzahl von spezifischen Wahrnehmungsnetzwerken basierend auf jedem ausgegebenen Anomaliewert.

11. Verfahren (S100) nach Anspruch 10, wobei jedes Maschinenlernklassifizierungssystem einen Auto-Codierer (41) umfasst, der mit demselben Datensatz wie das entsprechende spezifische Wahrnehmungsnetzwerk trainiert ist, und wobei der Anomaliewert ein Rekonstruktionsfehler ist.

12. Computerprogrammprodukt, umfassend Anweisungen, die, wenn das Programm durch eine Rechenvorrichtung ausgeführt wird, veranlasst, dass der Computer das Verfahren (S100) nach einem der Ansprüche 1-11 ausführt.

13. Computerlesbares Speichermedium, umfassend Anweisungen, die bei Ausführung durch eine Rechenvorrichtung veranlassen, dass der Computer das Verfahren (S100) nach einem der Ansprüche 1-11 ausführt.

14. System (10) zum Bereitstellen von Umgebungswahrnehmung für ein Fahrzeug (1), wobei das System (10) Folgendes umfasst:
ein generalisiertes Wahrnehmungsnetzwerk (21), das einen allgemein trainierten Maschinenlernalgorithmus umfasst, der dazu konfiguriert ist, Wahrnehmungseigenschaften für eine Szene bereitzustellen, die in einem oder mehreren Eingabebildern abgebildet ist;
eine Vielzahl von spezifischen Wahrnehmungsnetzwerken (22), wobei jedes spezifische Wahrnehmungsnetzwerk einen spezifisch trainierten Maschinenlernalgorithmus umfasst, der dazu konfiguriert ist, eine Wahrnehmungsausgabe für eine Szene bereitzustellen, die in einem oder mehreren Eingabebildern abgebildet ist, wobei jeder spezifisch trainierte Maschinenlernalgorithmus mit Daten trainiert ist, die einer spezifischen Verkehrssituation zugeordnet sind, sodass jeder spezifisch trainierte Maschinenlernalgorithmus im Vergleich zu den anderen spezifisch trainierten Maschinenlernalgorithmen der Vielzahl von spezifischen Wahrnehmungsnetzwerken für eine andere Verkehrssituation trainiert ist; und
eine Steuerschaltung (11), die zu Folgendem konfiguriert ist:
Erlangen von Sensordaten (20) von einem oder mehreren fahrzeugmontierten Sensoren, wobei die erlangten Sensordaten Informationen über eine umliegende Umgebung des Fahrzeugs umfassen und die erlangten Sensordaten ein oder mehrere Bilder umfassen, die durch eine fahrzeugmontierte Kamera aufgenommen werden;
Auswählen eines oder mehrerer spezifischer Wahrnehmungsnetzwerke (22) zur Aktivierung aus der Vielzahl von spezifischen Wahrnehmungsnetzwerken basierend auf einer aktuellen Verkehrssituation, die in den erlangten Sensordaten (20) angegeben ist;
Zuführen von mindestens einem Teil der erlangten Sensordaten (20) zu jedem des einen oder der mehreren ausgewählten spezifischen Wahrnehmungsnetzwerke und zu dem generalisierten Wahrnehmungsnetzwerk, um eine Ausgabe von jedem des einen oder der mehreren ausgewählten spezifischen Wahrnehmungsnetzwerke und dem generalisierten Wahrnehmungsnetzwerk zu erlangen, wobei der mindestens eine Teil der erlangten Sensordaten das eine oder die mehreren Bilder umfasst, die durch die fahrzeugmontierte Kamera aufgenommen werden;
Fusionieren der erlangten Ausgaben aus jedem des einen oder der mehreren ausgewählten spezifischen Wahrnehmungsnetzwerke und dem generalisierten Wahrnehmungsnetzwerk (21), wobei die fusionierte Ausgabe eine oder mehrere Wahrnehmungsausgaben in Bezug auf die umliegende Umgebung des Fahrzeugs umfasst;
Übertragen der fusionierten Ausgabe an ein Modul eines automatisierten Fahrsystems (ADS) des Fahrzeugs.

15. Fahrzeug (1), umfassend ein System (10) nach Anspruch 14.

## Revendications

1. Procédé mis en œuvre par ordinateur (S100) pour fournir une perception d'environnement pour un véhicule ayant un système de conduite automatisée (ADS), dans lequel l'ADS comprend :
un réseau de perception généralisé (21) comprenant un algorithme d'apprentissage automatique entraîné de manière générale configuré pour fournir une sortie de perception pour une scène représentée dans une ou plusieurs images d'entrée, et
une pluralité de réseaux de perception spécifiques (22), chaque réseau de perception spécifique comprenant un algorithme d'apprentissage automatique entraîné de manière spécifique configuré pour fournir une sortie de perception pour une scène représentée dans une ou plusieurs images d'entrée, dans lequel chaque algorithme d'apprentissage automatique entraîné de manière spécifique est entraîné avec des données associées à une situation de trafic spécifique de telle sorte que chaque algorithme d'apprentissage automatique entraîné de manière spécifique est entraîné pour une situation de trafic différente par rapport aux autres algorithmes d'apprentissage automatique entraînés de manière spécifique de la pluralité de réseaux de perception spécifiques ;
dans lequel le procédé (S100) comprend les étapes consistant à :
obtenir (S101) des données de capteur provenant d'un ou plusieurs capteurs montés sur véhicule, les données de capteur obtenues comprenant des informations concernant un environnement environnant du véhicule, les données de capteur obtenues comprenant une ou plusieurs images capturées par une caméra montée sur véhicule ;
sélectionner (S102) un ou plusieurs réseaux de perception spécifiques pour une activation parmi la pluralité de réseaux de perception spécifiques sur la base d'une situation de trafic actuelle indiquée dans les données de capteur obtenues ;
fournir (S103) au moins une partie des données de capteur obtenues à chacun des un ou plusieurs réseaux de perception spécifiques sélectionnés et au réseau de perception généralisé afin d'obtenir une sortie de chacun des un ou plusieurs réseaux de perception spécifiques sélectionnés et du réseau de perception généralisé, l'au moins une partie des données de capteur obtenues comprenant les une ou plusieurs images capturées par la caméra montée sur véhicule ;
fusionner (S104) les sorties obtenues provenant de chacun des un ou plusieurs réseaux de perception spécifiques sélectionnés et du réseau de perception généralisé, la sortie fusionnée comprenant une ou plusieurs sorties de perception par rapport à l'environnement environnant du véhicule ;
transmettre (S105) la sortie fusionnée à un module de l'ADS.

2. Procédé (S100) selon la revendication 1, dans lequel l'algorithme d'apprentissage automatique entraîné de manière générale est entraîné avec un ensemble de données d'entraînement couvrant une plus grande variété de situations de trafic qu'un ensemble de données d'entraînement utilisé pour entraîner l'un quelconque des algorithmes d'apprentissage automatique entraînés de manière spécifique.

3. Procédé (S100) selon la revendication 1 ou 2, dans lequel les données de capteur obtenues (S101) comprennent en outre des informations concernant une vitesse actuelle du véhicule et des données cartographiques de l'environnement environnant du véhicule.

4. Procédé (S100) selon la revendication 3, dans lequel les situations de trafic spécifiques comprennent différentes plages de la vitesse actuelle du véhicule.

5. Procédé (S100) selon l'une quelconque des revendications 1 à 3, dans lequel la situation de trafic spécifique est l'une parmi une situation d'embouteillage, une situation d'autoroute à grande vitesse, une situation de conduite de nuit, une situation de conduite dans des conditions de pluie, ou une situation de conduite dans des conditions de neige.

6. Procédé (S100) selon l'une quelconque des revendications 1 à 5, dans lequel l'étape consistant à fournir au moins la partie des données de capteur obtenues comprend :
la commande (S108) d'un ou plusieurs commutateurs de manière à fournir un flux de données comprenant l'au moins une partie des données de capteur obtenues (S101) uniquement aux un ou plusieurs réseaux de perception spécifiques sélectionnés (S102) et au réseau de perception généralisé.

7. Procédé (S100) selon l'une quelconque des revendications 1 à 5, dans lequel les algorithmes d'apprentissage automatique entraînés de manière spécifique de la pluralité de réseaux de perception spécifiques sont des réseaux de neurones artificiels qui partagent une architecture de réseau commune, chaque réseau de neurones artificiels ayant une matrice de poids individuelle pour l'architecture de réseau commune, et dans lequel l'étape consistant à fournir au moins la partie des données de capteur obtenues comprend :
la commutation (S109) de la matrice de poids de l'architecture de réseau commune conformément aux un ou plusieurs réseaux de perception spécifiques sélectionnés.

8. Procédé (S100) selon l'une quelconque des revendications 1 à 7, dans lequel chaque réseau de perception spécifique est associé à un ensemble correspondant de paramètres opérationnels, et dans lequel l'étape consistant à sélectionner un ou plusieurs réseaux de perception spécifiques pour une activation comprend :
la comparaison (S106) des données de capteur avec chaque ensemble correspondant de paramètres opérationnels et la sélection des un ou plusieurs réseaux de perception spécifiques pour une activation parmi la pluralité de réseaux de perception spécifiques sur la base de la comparaison.

9. Procédé (S100) selon la revendication 8, comprenant en outre :
la détermination d'un ensemble de paramètres opérationnels actuels sur la base des données de capteur obtenues ; et
dans lequel l'étape consistant à comparer (S106) les données de capteur avec chaque ensemble correspondant de paramètres opérationnels comprend :
la comparaison de l'ensemble déterminé de paramètres opérationnels actuels avec chaque ensemble correspondant de paramètres opérationnels et la sélection des un ou plusieurs réseaux de perception spécifiques pour une activation parmi la pluralité de réseaux de perception spécifiques dont l'ensemble de paramètres opérationnels correspond à l'ensemble déterminé de paramètres opérationnels actuels.

10. Procédé (S100) selon l'une quelconque des revendications 1 à 7, dans lequel l'ADS comprend en outre une pluralité de systèmes de classification par apprentissage automatique comprenant un système de classification par apprentissage automatique correspondant pour chaque réseau de perception spécifique, dans lequel chaque système de classification par apprentissage automatique est entraîné sur le même ensemble de données qu'un réseau de perception spécifique correspondant, et dans lequel l'étape consistant à sélectionner un ou plusieurs réseaux de perception spécifiques pour une activation comprend :
la fourniture des données de capteur obtenues à chaque système de classification par apprentissage automatique correspondant afin de distinguer (S107) des expériences nouvelles d'expériences connues de chaque système de classification par apprentissage automatique dans les données de capteur obtenues et de sortir une valeur d'anomalie indicative d'un niveau de correspondance entre la situation de trafic actuelle et une situation de trafic pour laquelle le réseau de perception spécifique correspondant respectif est entraîné ;
la sélection (S102) des un ou plusieurs réseaux de perception spécifiques pour une activation parmi la pluralité de réseaux de perception spécifiques sur la base de chaque valeur d'anomalie de sortie.

11. Procédé (S100) selon la revendication 10, dans lequel chaque système de classification par apprentissage automatique comprend un auto-encodeur (41) entraîné sur le même ensemble de données que le réseau de perception spécifique correspondant, et dans lequel la valeur d'anomalie est une erreur de reconstruction.

12. Produit programme informatique comprenant des instructions qui, lorsque le programme est exécuté par un dispositif informatique, amènent l'ordinateur à réaliser le procédé (S100) selon l'une quelconque des revendications 1 à 11.

13. Support de stockage lisible par ordinateur comprenant des instructions qui, lorsqu'elles sont exécutées par un dispositif informatique, amènent l'ordinateur à réaliser le procédé (S100) selon l'une quelconque des revendications 1 à 11.

14. Système (10) pour fournir une perception d'environnement pour un véhicule (1), le système (10) comprenant :
un réseau de perception généralisé (21) comprenant un algorithme d'apprentissage automatique entraîné de manière générale configuré pour fournir des caractéristiques de perception pour une scène représentée dans une ou plusieurs images d'entrée ;
une pluralité de réseaux de perception spécifiques (22), chaque réseau de perception spécifique comprenant un algorithme d'apprentissage automatique entraîné de manière spécifique configuré pour fournir une sortie de perception pour une scène représentée dans une ou plusieurs images d'entrée, dans lequel chaque algorithme d'apprentissage automatique entraîné de manière spécifique est entraîné avec des données associées à une situation de trafic spécifique de telle sorte que chaque algorithme d'apprentissage automatique entraîné de manière spécifique est entraîné pour une situation de trafic différente par rapport aux autres algorithmes d'apprentissage automatique entraînés de manière spécifique de la pluralité de réseaux de perception spécifiques ; et
des circuits de commande (11) configurés pour :
obtenir des données de capteur (20) provenant d'un ou plusieurs capteurs montés sur véhicule, les données de capteur obtenues comprenant des informations concernant un environnement environnant du véhicule, les données de capteur obtenues comprenant une ou plusieurs images capturées par une caméra montée sur véhicule ;
sélectionner un ou plusieurs réseaux de perception spécifiques (22) pour une activation parmi la pluralité de réseaux de perception spécifiques sur la base d'une situation de trafic actuelle indiquée dans les données de capteur obtenues (20) ;
fournir au moins une partie des données de capteur obtenues (20) à chacun des un ou plusieurs réseaux de perception spécifiques sélectionnés et au réseau de perception généralisé afin d'obtenir une sortie de chacun des un ou plusieurs réseaux de perception spécifiques sélectionnés et du réseau de perception généralisé, l'au moins une partie des données de capteur obtenues comprenant les une ou plusieurs images capturées par la caméra montée sur véhicule ;
fusionner les sorties obtenues provenant de chacun des un ou plusieurs réseaux de perception spécifiques sélectionnés et du réseau de perception généralisé (21), la sortie fusionnée comprenant une ou plusieurs sorties de perception par rapport à l'environnement environnant du véhicule ;
transmettre la sortie fusionnée à un module d'un système de conduite automatisée (ADS) du véhicule.

15. Véhicule (1) comprenant un système (10) selon la revendication 14.
